**Europäisches Patentamt**

**European Patent Office**

**Office européen des brevets**

(19)

(11) Numéro de publication: **0 292 360**
**B1**

(12) **FASCICULE DE BREVET EUROPEEN**

(45) Date de publication du fascicule du brevet:
08.08.90

(51) Int. Cl.⁵: **F16D 55/22**

(21) Numéro de dépôt: **88401132.1**

(22) Date de dépôt: **10.05.88**

(54) **Frein à disque à étrier en un matériau présentant une faible résistance à la pression.**

(30) Priorité: **21.05.87 FR 8707115**

(43) Date de publication de la demande:
**23.11.88 Bulletin 88/47**

(45) Mention de la délivrance du brevet:
**08.08.90 Bulletin 90/32**

(84) Etats contractants désignés:
**DE ES FR GB IT**

(56) Documents cités:
**FR-A- 1 536 552**
**FR-A- 2 404 767**
**FR-A- 2 448 071**
**FR-A- 2 508 128**
**GB-A- 2 172 068**

(73) Titulaire: **BENDIX France Société Anonyme dite:,
126, rue de Stalingrad, F-93700 Drancy(FR)**

(72) Inventeur: **Fargier, Eric, 13, Avenue du Maréchal Foch,
F-93360 Neuilly-Plaisance(FR)**
Inventeur: **Thioux, Alain, 9, Allée des Bordes,
F-94430 Chennevière sur Marne(FR)**

(74) Mandataire: **Timoney, Ian Charles Craig et al, BENDIX
FRANCE Division Technique Service Brevets Bendix
Europe 126, rue de Stalingrad, F-93700 Drancy(FR)**

ACTORUM AG

## Description

L'invention concerne un frein à disque dont l'étrier est réalisé en un matériau tel que l'aluminium présentant une faible résistance à la pression superficielle.

Plus précisément, l'invention concerne un frein à disque dans lequel deux patins de friction disposés de part et d'autre d'un disque tournant sont maintenus par au moins une broche traversant des perçages alignés formés dans l'étrier et dans chacun des patins, et dans lequel le couple engendré par l'application des garnitures des patins contre le disque est supporté par des surfaces d'appui formées sur l'étrier.

Dans un frein à disque de ce type, la réalisation de l'étrier en un matériau tel que l'aluminium pose différents problèmes.

Ainsi, un appui direct des patins sur les surfaces d'appui de l'étrier sous l'effet du couple appliqué sur les patins lors du freinage conduirait alors à une détérioriation rapide de ces surfaces d'appui.

De plus, les broches servant à maintenir les patins étant habituellement réalisées en acier, les perçages formés dans l'étrier pour recevoir les extrémités des broches se détérioreraient également rapidement, à la fois en raison de la résistance mécanique insuffisante de l'aluminium, et par suite d'un effet de pile se produisant entre l'aluminium et l'acider des broches.

Par ailleurs, l'adjonction de pièces supplémentaires permettant de résoudre ces problèmes doit pouvoir être faite dans le cadre d'un montage automatisé du frein, adapté à la grande série.

L'invention a précisément pour objet un frein à disque dont l'étrier est réalisé en un matériau présentant une faible résistance à la pression et qui comprend des moyens permettant d'éviter l'usure prématurée des surfaces de l'étrier assurant l'appui des patins lors du freinage et des perçages de l'étrier supportant les broches de retenue des patins, sans empêcher un montage automatisé du frein en grande série.

Selon l'invention, ce résultat est obtenu au moyen d'un frein à disque comprenant un disque tournant, un étrier chevauchant le disque et portant au moins un moteur de frein et deux patins de friction montés dans l'étrier, de part et d'autre du disque, de façon à être amenés en contact de friction avec le disque lors d'un actionnement du moteur de frein, l'étrier comportant des surfaces d'appui sur lesquelles viennent s'appliquer des bord d'extrémité des patins, lors de leur engagement de friction avec le disque et étant recouvertes par des plaques d'appui réalisées en des matériaux présentant une plus grande résistance à la pression que l'étrier, les patins et l'étrier comportant des perçages alignés que traverse au moins une broche de retenue, disposée au-delà d'un bord périphérique du disque, conformément à l'enseignement du document GB-A 2 172 068. Une broche de retenue est par ailleurs décrite dans FR-A 2 448 071.

Selon la présente invention, les plaques d'appui sont fixées à l'étrier par des rivets qui traversent les perçages formés dans l'étrier et dans lesquels est reçue ladite broche, et qui sont également réalisés en des matériaux présentant une plus grande résistance à la pression que l'étrier.

Cet agencement assure la protection des surfaces d'appui et des perçages formés sur l'étrier, en évitant d'avoir recours à des moyens de fixation des plaques d'appui interdisant un montage automatique du frein. En effet, les plaques d'appui sont fixées par le sertissage des rivets, en un emplacement très accessible du frein, parfaitement adapté à une fabrication en grande serie.

De préférence, chacune des plaques d'appui comprend au moins une partie repliée sur une partie adjacente de l'étrier, pour empêcher toute rotation de cette plaque d'appui autour de la broche. Il est à noter que cette caractéristique est également compatible avec un montage automatisé du frein.

Selon un mode de réalisation particulier de l'invention, le frein comporte deux broches de retenue, chacune des surfaces d'appui de l'étrier étant recouverte par une plaque d'appui indépendante dont une extrémité voisine du bord périphérique du disque comporte un prolongement pourvu d'un trou que traverse l'un des rivets, et dont une extrémité opposée comporte ladite partie repliée.

Pour faciliter le montage et le démontage des patins, l'extrémité de chaque plaque d'appui comportant la partie repliée comprend également une languette sur laquelle repose l'un des patins lorsque les broches sont retirées.

De préférence, l'étrier est en aluminium, et les plaques d'appui, les rivets et les broches sont en acier.

En outre, chacune des broches peut notamment être terminée par une olive à une première extrémité et par une partie de diamètre réduit à sa deuxième extrémité, cette olive étant reçue dans un rivet creux de diamètre intérieur uniforme alors que la partie de diamètre réduit est reçue dans une partie de diamètre réduit d'un rivet creux à alésage étagé.

Un mode de réalisation de l'invention va maintenant être décrit, à titre d'exemple nullement limitatif, en se référant aux dessins annexés dans lesquels :

- la figure 1 est une vue de côté et en coupe représentant schématiquement un frein à disque conforme à l'invention ;
- la figure 2 est une vue de dessus fragmentaire, à plus grande échelle et en coupe partielle du frein à disque de la figure 1 ; et
- la figure 3 est une vue en perspectie éclatée du frein à disque des figures 1 et 2, illustrant principalement l'implantation de l'une des plaques d'appui.

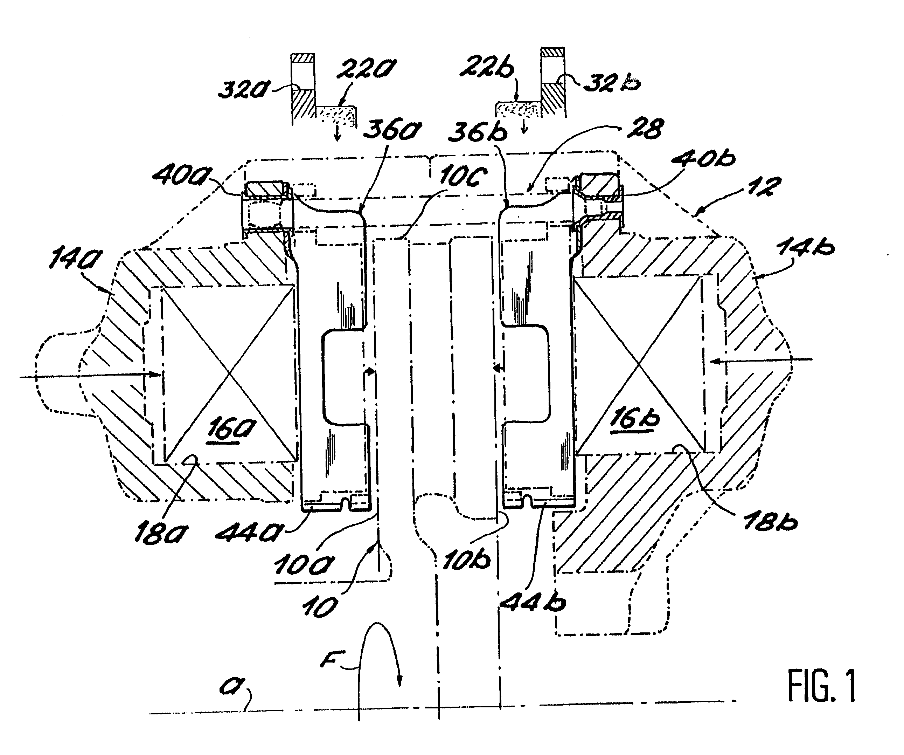

Le frein à disque représenté sur les figures comprend un disque de frein 10 fixé sur une partie tournante telle qu'une roue du véhicule. Le disque 10 est donc animé d'un mouvement de rotation autour de son axe de rotation $\underline{a}$, comme l'illustre la flèche F sur la figure 1.

Dans le mode de réalisation représenté, le frein à disque comprend de plus un étrier 12 fixé, par exemple par des boulons (non représentés), sur une partie non tournante proche de la roue portant le disque 10. Cette partie non tournante peut notamment être une fusée d'essieu.

L'étrier 12 chevauche le disque 10 et comprend de part et d'autre de celui-ci au moins un moteur de frein 14a, 14b, par exemple à actionnement hydraulique. Chacun des moteurs 14a, 14b comprend dans ce cas un piston 16a, 16b monté coulissant dans un cylindre 18a, 18b d'axe parallèle à l'axe du disque et débouchant du côté de la face correspondante 10a, 10b du disque 10 (figure 1).

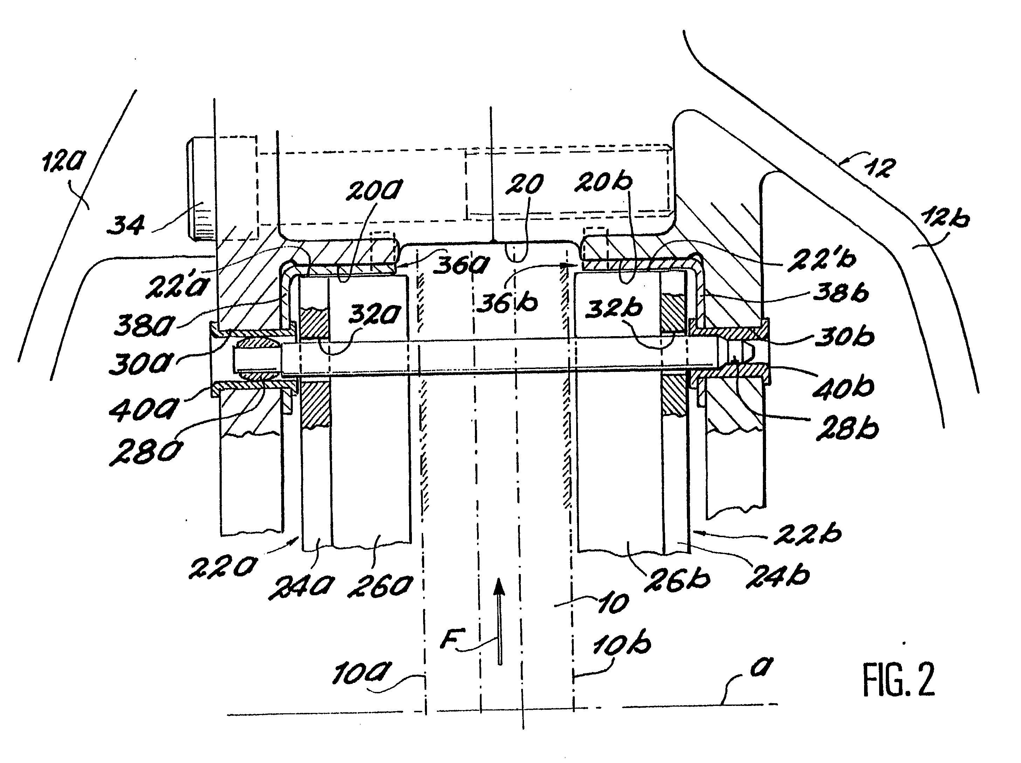

Dans sa partie centrale surplombant le bord périphérique 10c du disque 10, l'étrier 12 présente un évidement rectangulaire 20 (figure 2), par lequel peuvent être mis en place et retirés deux patins de friction 22a, 22b. Chacun de ces patins comprend respectivement une plaque porte-garniture 24a, 24b et une garniture de friction 26a, 26b supportée par cette plaque. Les patins 22a, 22b sont disposés de part et d'autre du disque 10, de telle sorte que les plaques porte-garniture 24a, 24b soient adjacentes aux pistons 16a, 16b et les garnitures de friction 26a, 26b adjacentes aux faces 10a, 10b du disque, respectivement.

Le supportage des patins 22a et 22b est assuré par deux broches identiques 28, dont l'une seulement apparaît sur la figure 2. Ces deux broches 28 sont orientées parallèlement à l'axe a du disque et disposées symétriquement de part et d'autre d'un plan de symétrie du frein passant par cet axe a, au-delà du bord périphérique 10c du disque. Les extrémités des broches sont en appui dans des perçages 30a, 30b, formés dans des parties de l'étrier 12 bordant l'évidement 20 et orientées parallèlement aux faces 10a, 10b du disque. Les broches 28 traversent en outre avec un certain jeu des perçages 32a, 32b formés dans les plaques porte-garniture 24a, 24b des patins.

Les patins 22a et 22b sont identiques et de forme généralement rectangulaire. Ils comportent notamment deux bords d'extrémité parallèles, circonférentiellement espacés par rapport au bord périphérique du disque 10. Sur la figure 2, les références 22'a, 22'b désignent l'un de ces bords pour chacun des patins 22a, 22b.

Lorsque le frein est actionné, les moteurs de frein 14a, 14b pressent les garnitures 26a, 26b des patins contre les faces correspondantes 10a, 10b du disque. Le contact de friction ainsi obtenu a pour effet de ralentir la rotation du disque 10 et, par conséquent, de freiner le véhicule.

Lors du contact de friction entre le disque tournant et les garnitures des patins montés dans l'étrier fixe, un couple est appliqué par le disque sur les patins et tend à faire tourner ces derniers dans le même sens que le disque. Ce couple est transmis directement à l'étrier 12 par la venue en appui des bords d'extrémité 22'a, 22'b des patins contre des surfaces d'appui en vis-à-vis 20a, 20b formées sur l'étrier, lorsque le disque tourne dans le sens de la flèche F sur la figure 2 (déplacement du véhicule en marche avant).

Il est à noter que le frein est symétrique par rapport à un plan passant par l'axe a et perpendiculaire au plan de la figure 2, de sorte que les bords d'extrémité opposés des patins viennent en appui contre d'autres surfaces d'appui formées sur l'étrier, lorsque le disque tourne en sens opposé (déplacement du véhicule en marche arrière).

La venue en appui des bords d'extrémité des patins contre les surfaces d'appui de l'étrier est permise par le jeu existant entre les broches 28 et les perçages 32a, 32b formés dans les plaques porte-garniture des patins. Ainsi, les broches assurent le maintien des patins sans supporter le couple induit lors du freinage.

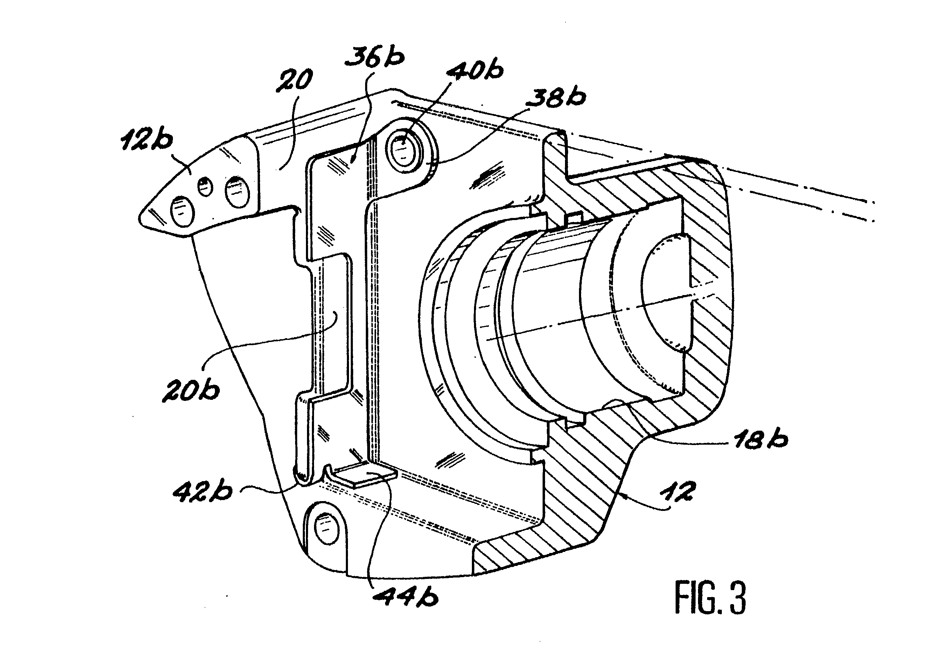

Comme le montre la figure 3, les surfaces d'appui telles que la surface 20b sont formées dans deux plans parallèles et symétriques par rapport au plan de symétrie du frein défini précédemment, et elles s'étendent vers l'intérieur du frein à partir des bords parallèles et circonférentiellement espacés de l'évidement 20.

Conformément à l'invention, l'étrier 12 est réalisé en un matériau présentant une faible résistance à la pression, tel que l'aluminium et ses alliages. En outre, il est généralement réalisé en deux parties 12a, 12b dont le plan de joint est situé dans le plan médian du disque 10, comme l'illustre la figure 2. Ces deux parties 12a, 12b sont assemblées par tout moyen approprié tel que des vis 34.

Par ailleurs, les plaques porte-garniture 24a, 24b ainsi que les broches 28 sont habituellement réalisées en acier inoxydable.

Pour éviter la détérioration des surfaces d'appui telles que les surfaces 20a, 20b formées sur l'étrier en raison notamment de la mauvaise tenue mécanique du matériau constituant l'étrier, on place sur chacune de ces surfaces une plaque métallique 36a, 36b, respectivement. De préférence, les plaques 36a, 36b sont réalisées en tôle d'acier inoxydable.

Comme l'illustre la figure 3, chacune des plaques telles que la plaque 36b a une forme généralement rectangulaire et peut présenter une échancrure dans sa partie centrale, en correspondance avec une échancrure formée sur la surface d'appui 20b. A son extrémité tournée vers l'extérieur du frein, la plaque 36b comporte un prolongement 38b replié à angle droit par rapport au plan de la plaque, le long du bord adjacent de l'évidement 20 parallèle aux faces 10a, 10b du disque. Ce prolongement 38b est percé d'un trou aligné avec le perçage 30b de l'étrier et ayant approximativement le même diamètre que ce perçage (figure 2).

Le prolongement 38b permet de fixer la plaque 36b sur l'étrier au moyen d'un rivet 40b traversant à la fois le trou formé dans ce prolongement et le perçage 30b. Ce rivet 40b est de préférence réalisé en acier inoxydable. Il est serti sur l'étrier et reçoit l'extrémité correspondante de la broche 28, comme le montre la figure 2.

Chacune des autres plaques d'appui est également fixée sur l'étrier au moyen d'un rivet, tel que le rivet 40a pour la plaque 36a sur la figure 2. Les deux extrémités de chacune des broches 38 ne sont donc en contact direct avec les perçages tels que 30a, 30b mais avec des rivets en acier inoxydable. Cette caractéristique permet d'éviter une détérioriation rapide des perçages pouvant résulter à la fois d'une mauvaise tenue mécanique du matériau constituant l'étrier et d'un effet de pile entre ce matériau et l'acier des broches 38.

En se reportant à la figure 3, on voit que la fixation des plaques telles que 36b sur l'étrier est complétée par le pliage d'au moins une partie 42b de chaque plaque d'appui, située à l'extrémité de cette plaque tournée vers l'intérieur du frein, sur une partie correspondante de l'étrier 12.

Enfin, l'extrémité de chaque plaque telle que 36b tournée vers l'intérieur du frein comporte également une languette 44b repliée à un angle droit par rapport au plan de la plaque, parallèlement à l'axe du disque, en sens opposé par rapport à la partie repliée 42b. Cette languette 44b sert d'appui pour le bord inférieur du patin correspondant, lors de son montage et de son démontage. Plus précisément, comme on l'a illustré sur la figure 1, lors de la mise en place des patins 22a, 22b, ceux-ci peuvent reposer provisoirement sur les languettes 44a, 44b avant que les broches 28 ne soient introduites. De même, ces languettes permettent d'éviter la chute des patins lors de l'enlèvement des broches précédant le démontage des patins.

Sur la figure 2, on a représenté plus en détail l'une des broches 28 et les rivets 40a, 40b qui la supportent conformément à l'invention. L'extrémité de la broche 28 reçue dans le rivet 40a porte une olive 28a, alors que son extrémité opposée, reçue dans le rivet 40b, comprend une partie 28b de diamètre réduit. Le rivet 40a dans lequel est reçu l'olive 28a est un rivet creux présentant un diamètre intérieur uniforme. En revanche, le rivet 40b dans lequel est reçue l'extrémité de la broche présentant la partie 28b de diamètre réduit est un rivet creux présentant un alésage étagé, la partie 28b étant reçue dans la partie de diamètre réduit de cet alésage. Ce rivet 40b peut être obtenu par perçage rivet plein à tête plate.

Le montage de la deuxième broche est totalement identique à celui de la broche 28.

Il est à noter que l'invention permet de supprimer les inconvénients liés à la nature du matériau constituant l'étrier, sans empêcher pour autant l'assemblage automatisé du frein. En effet, le montage des plaques d'appui et des rivets peut être effectué aisément avant que les deux moitiés de l'étrier ne soient assemblées.

Bien entendu, l'invention n'est pas limitée au mode de réalisation qui vient d'être décrit à titre d'exemple. Ainsi, bien qu'elle s'applique avantageusement à un frein à disque à étrier fixe, elle peut aussi être utilisée dans un frein à disque à étrier coulissant.

Par ailleurs, l'invention couvre aussi le cas où les patins sont maintenus par une broche unique. Au lieu de prévoir une plaque d'appui séparée pour chaque surface d'appui, les plaques d'appui situées d'un même côté du disque pourraient être formées dans une même plaque, notamment dans le cas d'une broche unique.

## Revendications

1. Frein à disque comprenant un disque tournant (10), un étrier (12) chevauchant le disque et portant au moins un moteur de frein (14a, 14b) et deux patins de friction (22a, 22b) montés dans l'étrier, de part et d'autre du disque, de façon à être amenés en contact de friction avec le disque lors d'un actionnement du moteur de frein, l'étrier (12) comportant des surfaces d'appui (20a, 20b) sur lesquelles viennent s'appliquer des bords d'extrémité (22'a, 22'b) des patins lors de leur engagement de friction avec le disque et étant recouvertes par des plaques d'appui (36a, 36b) réalisées en des matériaux présentant une plus grande résistance à la pression que l'étrier, les patins et l'étrier comportant des perçages alignés (32a, 32b, 30a, 30b) que traverse au moins une broche de retenue (28) disposée au-delà d'un bord périphérique (10c) du disque, caractérisé en ce que lesdites plaques d'appui (36a, 36b) sont fixées à l'étrier par des rivets (40a, 40b) qui traversent les perçages formés dans l'étrier et dans lesquels et reçue ladite broche (28), et qui sont également réalisés en des matériaux présentant une plus grande résistance à la pression que l'étrier.

2. Frein à disque selon la revendication 1, caractérisé en ce que chacune des plaques d'appui (36a, 36b) comprend au moins une partie (42b) repliée sur une partie adjacente de l'étrier, pour empêcher toute rotation de cette plaque d'appui autour de la broche (28).

3. Frein à disque selon la revendication 2, caractérisé en ce qu'il comporte deux broches de retenue (28), chacune des surfaces d'appui (20a, 20b) de l'étrier étant recouverte par une plaque d'appui indépendante (36a, 36b) dont une extrémité voisine du bord périphérique (10c) du disque comporte un prolongement (38a, 38b) pourvu d'un trou que traverse l'un des rivets (40a, 40b), et dont une extrémité opposée comporte ladite partie repliée (42b).

4. Frein à disque selon la revendication 3, caractérisé en ce que ladite extrémité opposée de chaque plaque d'appui (20a, 20b) comporte également une languette (44a, 44b) sur laquelle repose l'un des patins (22a, 22b) lorsque les broches (28) sont retirées.

5. Frein à disque selon l'une quelconque des revendications précédentes, caractérisé en ce que l'étrier (12) est en aluminium, alors que les plaques d'appui (20a, 20b), les rivets (40a, 40b) et les broches (28) sont en acier.

6. Frein à disque selon l'une quelconque des revendications précédentes, caractérisé en ce que chacune des broches (28) est terminée par une olive (28a) à une première extrémité et par une partie de diamètre réduit (28b) à sa deuxième extrémité, cette olive (28a) étant reçue dans un rivet creux (40a) de diamètre intérieur uniforme alors que la partie de diamètre réduit (28b) est reçue dans une partie de diamètre réduit d'un rivet creux (40b) à alésage étagé.

## Patentansprüche

1. Scheibenbremse mit einer Drehscheibe (10), einem die Scheibe übergreifenden Sattel (12), der mindestens einen Bremsantrieb (14a, 14b) und zwei Reibklötze (22a, 22b) trägt, die beiderseits der Scheibe in den Sattel montiert sind, so daß sie bei einer Betätigung des Bremsantriebs mit der Scheibe in Reibungskontakt treten, wobei der Sattel (12) Auflageflächen (20a, 20b) umfaßt, auf die sich die Außenränder (22'a, 22'b) der Klötze bei ihrem Reibungseingriff mit der Scheibe anpressen, und die von Auflageplatten (36a, 36b) bedeckt sind, die aus Materialien bestehen, die eine größere Druckfestigkeit als der Sattel haben, wobei die Klötze und der Sattel angereihte Bohrungen (32a, 32b, 30a, 30b) haben, die von mindestens einer Haltespindel (28) durchquert werden, die jenseits eines Umfangsrandes (10c) der Scheibe angeordnet ist, dadurch gekennzeichnet, daß diese Auflageplatten (36a, 36b) an den Sattel durch Nieten (40a, 40b) befestigt sind, welche die im Sattel ausgebildeten Bohrungen durchqueren und in welchen diese Spindel (28) aufgenommen wird, und die ebenfalls in Materialien ausgeführt sind, die eine größere Druckfestigkeit als der Sattel aufweisen.

2. Scheibenbremse nach Anspruch 1, dadurch gekennzeichnet, daß jede der Auflageplatten (36a, 36b) mindestens eine Partie (42b) enthält, die auf einer an den Sattel angrenzenden Partie umgebogen ist, um jegliche Rotation dieser Auflageplatte um die Spindel (28) herum zu vermeiden.

3. Scheibenbremse nach Anspruch 2, dadurch gekennzeichnet, daß sie zwei Haltespindeln (28) umfaßt, wobei jede der Auflageflächen (20a, 20b) des Sattels von einer unabhängigen Auflageplatte (36a, 36b) bedeckt ist, von der ein dem Außenrand (10c) der Scheibe benachbartes Ende eine Verlängerung (38a, 38b) umfaßt, die mit einem von einer der Nieten (40a, 40b) durchquerten Loch versehen ist und von der ein gegenüberliegendes Ende diese umgebogene Partie (42b) umfaßt.

4. Scheibenbremse nach Anspruch 3, dadurch gekennzeichnet, daß dieses gegenüberliegende Ende jeder Auflagefläche (20a, 20b) ebenfalls eine Zunge (44a, 44b) umfaßt, auf der einer der Klötze (22a, 22b) ruht, wenn die Spindeln (28) herausgezogen sind.

5. Scheibenbremse nach einem der vorhergehenden Ansprüche, dadurch gekennzeichnet, daß der Sattel (12) aus Aluminium ist, wohingegen die Auflageflächen (20a, 20b), die Nieten (40a, 40b) und die Spindeln (28) aus Stahl sind.

6. Scheibenbremse nach einem der vorhergehenden Ansprüche, dadurch gekennzeichnet, daß jede der Spindeln (28) in einer Olive (28a) an einem ersten Ende und in einer Partie reduzierten Durchmessers (28b) an ihrem zweiten Ende endet, wobei diese Olive (28a) in einem Hohlniet (40a) gleichmäßigen Innendruchmessers aufgenommen wird, wohingegen die Partie reduzierten Durchmessers (28b) von einer Partie reduzierten Durchmessers eines Hohlniets (40b) mit Stufenbohrung aufgenommen wird.

**Claims**

1. Disc brake comprising a rotating disc (10), a caliper (12) straddling the disc and carrying at least one brake motor (14a, 14b), and two friction blocks (22a, 22b) mounted in the caliper on either side of the disc, so as to be brought into frictional contact with the disc during an actuation with the brake motor, the caliper (12) having bearing surfaces (20a, 20b), onto which end edges (22'a, 22'b) of the blocks are laid during their frictional engagement with the disc, and being covered with bearing plates (36a, 36b) made of materials having a higher pressure resistance than the caliper, the blocks and the caliper having aligned bores (32a, 32b, 30a, 30b), through which passes at least one retaining pin (28) located beyond a peripheral edge (10c) of the disc, characterized in that the said bearing plates (36a, 36b) are fastened to the caliper by rivets (40a, 40b) which pass through the bores formed in the caliper and in which the said pin (28) is received, and which are likewise made of materials having a higher pressure resistance than the caliper.

2. Disc brake according to claim 1, characterized in that each of the bearing plates (36a, 36b) has at least one part (42b) bent onto an adjacent part of the caliper, to prevent any rotation of this bearing plate about the pin (28).

3. Disc brake according to claim 2, characterized in that it has two retaining pins (28), each of the bearing surfaces (20a, 20b) of the caliper being covered with a separate bearing plate (36a, 36b), of which one end adjacent to the peripheral edge (10c) of the disc has an extension (38a, 38b) provided with a hole, through which one of the rivets (40a, 40b) passes, and of which an opposite end has the said bent part (42b).

4. Disc brake according to claim 3, characterized in that the said opposite end of each bearing plate (20a, 20b) also has a tongue (44a, 44b), on which one of the blocks (22a, 22b) rests when the pins (28) are withdrawn.

5. Disc brake according to any one of the preceding claims, characterized in that the caliper (12) is made of aluminium, whilst the bearing plates (20a, 20b), the rivets (40a, 40b) and the pins (28) are made of steel.

6. Disc brake according to any one of the preceding claims, characterized in that each of the pins (28) terminates in a knob (28a) at a first end and in a part of reduced diameter (28b) at its second end, this knob (28a) being received in a hollow rivet (40a) of uniform inside diameter, whilst the part of reduced diameter (28b) is received in a part of reduced diameter of a hollow rivet (40b) with a stepped bore.

FIG. 1

EP 0 292 360 B1

FIG.2

EP 0 292 360 B1

FIG.3

EP 0 292 360 B1